# EUROPÄISCHE PATENTANMELDUNG

(11) **EP 0 536 532 A2**
(43) Veröffentlichungstag der Anmeldung: **14.04.1993**
(21) Anmeldenummer: 92115039.7
(22) Anmeldetag: 03.09.1992
(51) Int. Cl.: B23Q 35/02, B23Q 1/25, B23Q 16/00, B23B 39/00

(54) **Bohrmaschine, insbesondere für die Holzbearbeitung**

(30) Priorität: 06.09.1991 DE 4129745
(71) Anmelder: REICH Spezialmaschinen GmbH, 72622 Nürtingen (DE)
(72) Erfinder: Keusch, Siegfried, W-7310 Plochingen (DE)

(57) **Zusammenfassung**

Die Erfindung betrifft eine Bohrmaschine, insbesondere für die Holzbearbeitung, zum Bohren von Lochreihen und Konstruktionsbohrungen in plattenförmige Werkstücke, wie Schrankseitenwände, Schranktüren und dgl., mit einem eine Werkstückauflage (11) aufweisenden Maschinengestell (10) und einem an Führungsschienen (13,14) verstellbaren Bohraggregat (20), bei der die Werkstückauflage (11) einen Werkstückanschlag (12) und eine Anschlageinrichtung (30) mit in der Verstellrichtung des Bohraggregates (20) einstell- und festlegbaren Positionsfingern (23), die in Verbindung mit dem Bohraggregat (20) die Bohrpositionen längs der Verstellbahn des Bohraggregates (20) festlegen. Die Vorgabe von Bohrbildern mit mehreren Bohrungsreihen erfolgt mittels Positionswalzen (30,31), die mehrere Halteschienen (34) aufweisen, in denen Finger (37) vorpositioniert werden können. Die Finger (37) arbeiten mit Fingeraufnahmen (23,25) so zusammen, daß die Positionen für das Bohraggregat (20) festgelegt sind.

## Beschreibung

Die Erfindung betrifft eine Bohrmaschine, insbesondere für die Holzbearbeitung, zum Bohren von Lochreihen und Konstruktionsbohrungen in plattenförmige Werkstücke, wie Schrankseitenwände, Schranktüren und dgl., mit einem eine Werkstückauflage aufweisenden Maschinengestell und einem an Führungsschienen verstellbaren Bohraggregat, bei der die Werkstückauflage einen Werkstückanschlag und eine Anschlageinrichtung mit in der Verstellrichtung des Bohraggregates einstell- und festlegbaren Positionsfingern, die in Verbindung mit dem Bohraggregat die Bohrpositionen längs der Verstellbahn des Bohraggregates festlegen.

Eine Bohrmaschine dieser Art ist aus dem DE-GM 76 19 306 bekannt. Bei dieser bekannten Bohrmaschine ist das Bohraggregat unterhalb der Werkstückauflage angeordnet, so daß eingebrachte Sacklochbohrungen nicht einsehbar sind. Dies erschwert die Handhabung der bekannten Bohrmaschine. Außerdem ist das Bohraggregat nur in einer Richtung verstellbar, so daß für das Einbringen von mehreren Bohrungsreihen das Werkstück immer wieder neu auf der Werkstückauflage positioniert werden muß. Zur Positionierung des Bohraggregates ist ein in Verstellrichtung des Bohraggregates verschiebbarer Schlitten vorgesehen, an dem mehrere im Abstand nebeneinander angeordnete, in Bohraggregat-Verschieberichtung verlaufende und unterschiedlich lange Tastfinger gehalten sind. An einem an Führungen festgelegten Trägerblock sind mehrere, winklig zu den Tastfingern stehende, wahlweise einzeln höhenbewegbare Anschlagfinger vorgesehen.

Bei dieser bekannten Bohrmaschine kann mit den positionierten Tast- und Anschlagfingern stets nur eine bestimmte Bohrungsreihe optimal. Die Umrüstung auf eine andere Bohrungsreihe ist sehr umständlich und zeitraubend.

Es ist Aufgabe der Erfindung, eine Bohrmaschine der eingangs erwähnten Art zu schaffen, bei der über die Anschlageinrichtung mehrere Bohrungsreihen vorgegeben werden können, ohne daß das Werkstück immer wieder auf der Werkstückauflage neu positioniert werden muß.

Diese Aufgabe wird nach der Erfindung dadurch gelöst, daß das Bohraggregat von einem Traggerüst mit vorderen und hinteren Vertikalträgerpaaren getragen ist, das an Führungsschienen oder führungswellen parallel zur Vorder- und Rückseite der Werkstückauflage verstellbar ist, daß das Traggerüst mit einem Paar von Horizontal-Führungsschienen versehen sind, die senkrecht zur Vorder- und Rückseite gerichtet sind und auf denen das Bohraggregat verstellbar geführt ist, daß die Positionsfinger in Halteschienen einer Positionswalze, mit mehreren, längsgerichteten und über den Umfang verteilten Halteschienen einführbar und in gewünschten Bohrpositionen festlegbar sind, daß die Positionswalze parallel zur Längsseite der Werkstrückauflage angeordnet oder anbringbar ist, und mit einer am Traggerüst verstellbaren Fingeraufnahme zusammenarbeitet, und daß die Halteschienen der Positionswalze mit ihren positionierten Fingern wahlweise in Arbeitsstellung mit der Fingeraufnahme des Traggerüstes bringbar sind.

Bei dieser Ausgestaltung kann in jeder Halteschiene der Positionswalze das Bohrbild für eine Bohrungsreihe vorgegeben werden. Hat die Positionswalze n Halteschienen, dann lassen sich n Bohrungsreihen vorpositionieren. Dabei können einer Bohrungsreihe auch mehrere Halteschienen zugeordnet werden, um unterschiedliche Bohrungen in einer Bohrungsreihe einzubringen. Das dabei als Mehrspindel-Bohraggregat ausgebildete Bohraggregat wird dann nacheinander mit entsprechend bestückten Spindeln in die Arbeitsstellung gebracht.

Das Werkstück kann auf der Werkstückauflage festgelegt werden, wenn zudem vorgesehen ist, daß eine weitere Positionswalze parallel zu den Horizontal-Führungsschienen angebracht oder anbringbar ist und mit einer am Bohraggregat angebrachten, verstellbaren Fingeraufnahme zusammenarbeitet, wobei die Halteschienen der weiteren Positionswalze mit ihren positionierten Fingern wahlweise in Arbeitsstellung mit der Fingeraufnahme des Bohraggregates bringbar sind. Bei dieser Ausgestaltung lassen sich auch die Positionen der Bohrungsreihen vorpositionieren und die zugeordnete Positionswalze wird wahlweise auf die mit Fingern bestückten Halteschienen eingestellt.

Die Handhabung der Bohrmaschine, d.h. die Einstellung des Bohraggregates und der Positionswalzen, wird dadurch erleichtert, daß das Bohraggregat als Mehrspindel-Bohraggregat ausgebildet ist, deren Spindeln und die Halteschienen der Positionswalzen mit aufeinander abgestimmten Markierungen versehen sind, die die Zuordnung zwischen den Halteschienen mit ihren positionieren Fingern und den Spindeln des Mehrspindel-Bohraggregates festlegen.

Eine Ausgestaltung der Positionswalzen ist dadurch gekennzeichnet, daß die Halteschienen im wesentlichen eine hinterschnittene Aufnahme bilden und zu einem einstückigen n-eckigen Profilabschnitt vereinigt sind.

Ist dabei vorgesehen, daß die Positionswalzen in am Maschinengestell angebrachten Walzenlagern drehbar und vorzugsweise auswechselbar gelagert sind, dann können für unterschiedliche Werkstücke eigene Positionswalzen mit voreingestellten Fingern bereitgestellt werden. Bei dem Wechsel auf andere Werkstücke brauchen dann nur die dazugehörigen Positionswalzen eingesetzt werden.

Damit die Halteschienen der Positionswalzen definiert in die n Arbeitsstellungen eingestellt werden können, sieht eine weitere Ausgestaltung vor, daß den Positionswalzen jeweils eine Dreheinrichtung zugeordnet ist, mit der die Positionswalzen in 360°/n-Winkelschritten verdrehbar ist.

Die Einstellung des Traggerüstes und des Bohraggregates in die durch die Finger der Halteschienen vorgegebenen Arbeitspositionen wird dadurch exakt ausgeführt, daß die Positionsfinger einen kegelstumpfförmigen Kopf aufweisen, der in einen n-eckigen Profilabschnitt und einen Gewindebolzen übergeht und daß der Gewindebolzen des Positionsfingers durch die Bohrung einer Befestigungsplatte hindurch in die Halteschiene eingeführt und darin in eine in der Halteschiene gehaltene Mutter eingeschraubt ist, wobei die Fingeraufnahmen des Traggerüstes und des Bohraggregates auf die Außenkontur des Kopfes der Finger ausgelegt sind.

Damit die Arbeitsstellung zwischen - Fingeraufnahme -und Kopf des Fingers aufgehoben und wieder hergestellt werden kann, ist vorgesehen, daß die Fingeraufnahmen des Traggerüstes und des Bohraggregates mittels Handhebel in Richtung der Längsachse der Finger der in Arbeitsstellung befindlichen Halteschiene der Positionswalzan verstellbar und außer Eingriff mit dem in Arbeitsstellung befindlichen Finger bringbar sind.

Die Steuerung der Fingeraufnahmen kann auch automatisch erfolgen, wenn die Ausgestaltung so ist, daß die Fingeraufnahmen am Traggerüst und am Bohraggregat abgefedert sind und in Arbeitsstellung auf den betreffenden Finger der Halteschiene aufrasten.

Die Erfindung wird anhand eines in den Zeichnungen dargestellten Ausführungsbeispiels näher erläutert. Es zeigt:
- Fig. 1: in Seitenansicht die Bohrmaschine mit einem Mehrspindel-Bohraggregat, in der die Positionswalze für die Verstellung des Traggerüstes des Mehrspindel-Bohraggregates in Längsrichtung der Werkstückauflage erkennbar ist,
- Fig. 2: in Vorderansicht die Bohrmaschine nach Fig. 1, in der die Positionswalze für die Verstellung des Mehrspindel-Bohraggregates auf den Horizontal-Führungsschienen des Traggerüstes erkennbar ist, und Fig. 3 eine vergrößerte Ansicht auf die Stirnseite einer Positionswalze.

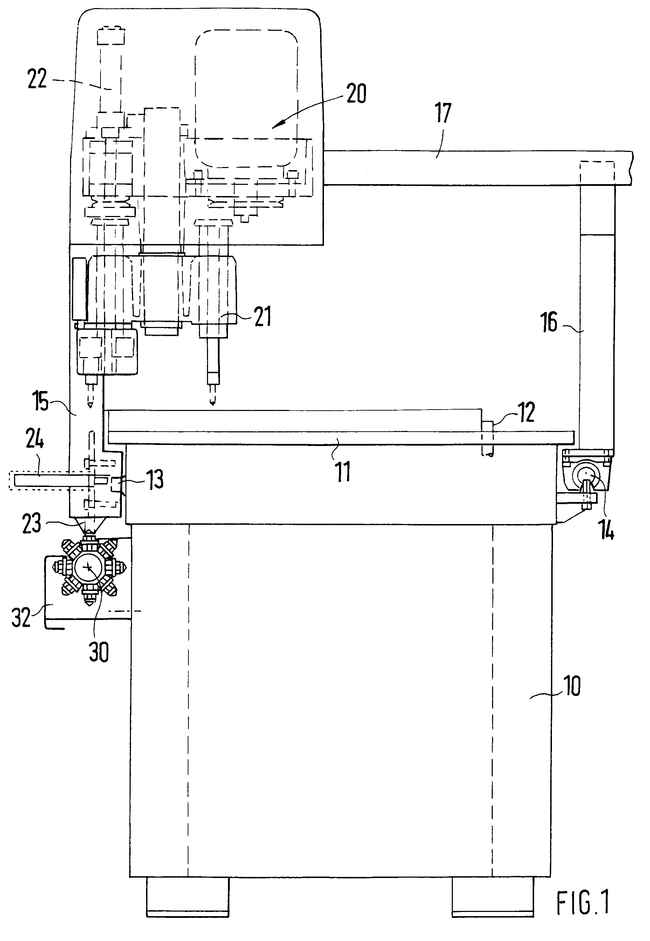

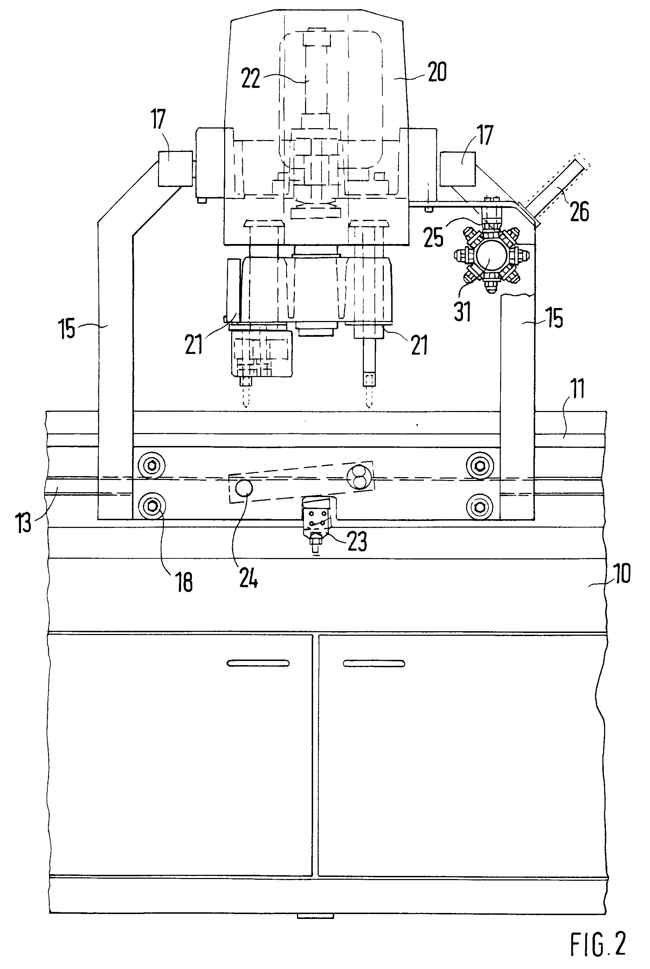

Wie die Fig. 1 und 2 zeigen, weist die Bohrmaschine ein Maschinengestell 10 auf, das zudem Schrankfächer aufweisen und Einrichtungen zum Steuern der Bohrmaschine tragen oder aufnehmen kann. Das Maschinengestell 10 ist mit einer Werkstückauflage 11 abgeschlossen, die im Bereich der Rückseite mit einem Werkstückanschlag 12 versehen ist, der die Position des Werkstückes auf der Werkstückauflage 11 festlegt. Im oberen Bereich des Maschinengestelles 10 ist entlang der Vorderseite eine Führungsschiene 13 angebracht, während entlang der Rückseite eine Führungswelle 14 angebracht ist. Mit Führungsrollenpaaren 18 oder ähnlichen Einrichtungen ist ein Traggerüst am Maschinengestell 10 entlang verstellbar. Dieses Traggerüst weist ein Paar von vorderen Vertikalträgern 15 und ein Paar von hinteren Vertikalträgern 16 auf. Am oberen Ende des Traggerüstes sind zwei im Abstand zueinander parallel angeordnete Horizontal-Führungsschienen 17 senkrecht zur Vorder- und Rückseite der Werkstückauflage 11 angebracht. Auf diesen Horizontal-Führungsschienen 17 ist ein Mehrspindel-Bohraggregat 20 verstellbar geführt. Das Mehrspindel-Bohraggregat 20 hat mehrere, drehbar angeordnete Spindeln 21, von denen eine in Arbeitsstellung gebracht ist und das erforderliche Werkzeug aufnimmt. Die in Arbeitsstellung befindliche Spindel 21 wird von einem Antriebsmotor angetrieben und von einer Stelleinrichtung 22 in Richtung zum Werkstück verstellt. Auf die Wirkungsweise und Steuerung des Mehrspindel-Bohraggregates 20 braucht hier nicht näher eingegangen zu werden, da dies bekannt und für die vorliegende Erfindung nicht von Bedeutung ist.

An der Vorderseite des Maschinengestelles 10 sind Walzenlager 32 angebracht, die eine Positionswalze 30 aufnehmen. Dabei hat die Positionswalze 30 axial stets eine bestimmte Stellung und kann in den Walzenlagern 32 drehbar und herausnehmbar gelagert sein.

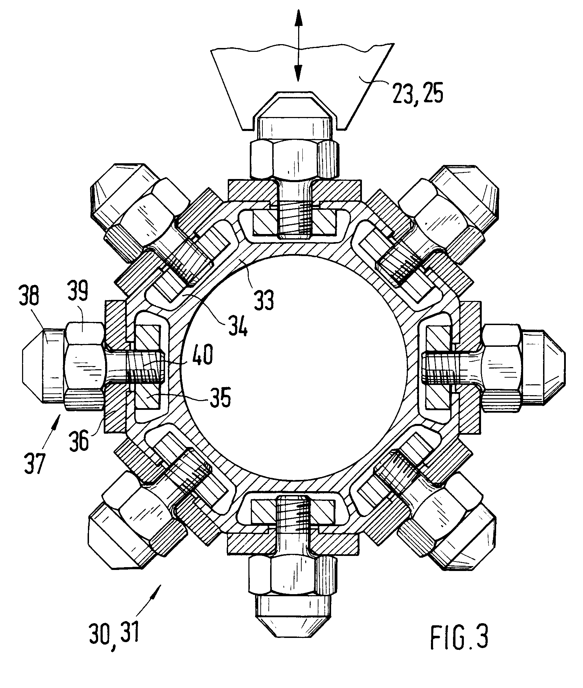

Wie Fig. 3 zeigt, weint die Positionswalze 30 einen Profilabschnitt 33 auf, der n=8 hinterschnittene Halteschienen 34 in sich vereinigt. In Längsrichtung dieser Halteschienen 34 werden Finger 37 eingeführt und an den Positionen arretiert, an denen eine Bohrung einer Bohrungsreihe einzubringen ist. Die Bestückung der Halteschienen 34 mit Fingern 37 richtet sich also nach dem Abstand der Bohrungen in einer Bohrungsreihe. Mit der im Ausführungsbeispiel gezeigten Positionswalze 30 können daher die Bohrbilder für acht Bohrungsreihen vorgegeben werden. Dabei ist vorgesehen, daß alle Halteschienen 34 in eine Arbeitsstellung bringbar sind, in der ihre positionierten Finger 37 senkrecht nach oben stehen und mit einer am Traggerüst angebrachten Fingeraufnahme 23 zusammenarbeiten können. Die Finger 37 haben einen kegelstumpfförmigen Kopf 38, an den sich ein Sechs- oder Achtkant 39 und ein Gewindebolzen 40 anschließt. Der Gewindebolzen 40 ist in eine in der Halteschiene 34 geführte und gehaltene Mutter 35 eingeschraubt, nachdem er vorher durch eine Bohrung einer Befestigungsplatte 36 in die Halteschiene 34 eingeführt wurde. Auf diese Weise können beliebig viele Finger 37 an beliebigen Stellen der Halteschiene 34 festgelegt und so ein gewünschtes Bohrbild vorgegeben werden. Dabei können auch mehrere Halteschienen 34 einer Bohrungsreihe zugeordnet werden, wobei den Halteschienen 34 andere Werkzeuge oder andere Spindeln 21 zugeordnet werden. Auf diese Weise lassen sich Bohrungsreihen mit unterschiedlichen Bohrungen in mehreren Verstellbewegungen des Mehrspindel-Bohraggregates 20 in Zusammenarbeit mit mehreren Halteschienen 34 der Positionswalze 30 einbringen.

Soll ein anderes Werkstück mit einem andersartigen Bohrbild versehen werden, dann braucht nur die Positionswalze 30 ausgewechselt und eine entsprechend vorpositionierte Positionswalze neu eingesetzt werden.

Für die Handhabung der Bohrmaschine ist es zweckmäßig, die Halteschienen 34 der Positionswalze 30 und die Spindeln 21 des Mehrspindel-Bohraggregates 20 mit aufeinander abgestimmten Markierungen zu versehen. Nur wenn die mit derselben Markierung wie die Spindel 21 versehene Halteschiene 34 in Arbeitsstellung steht, ist die richtige Zuordnung gegeben und entspricht dem gewünschten Bohrbild.

Das Mehrspindel-Bohraggregat 20 kann im einfachsten Fall mittels Stellspindeln oder dgl. auf den Horizontal-Führungsschienen 17 verstellt werden, um den Abstand für die einzubringende Bohrungsreihe zum Werkstückanschlag 12 einstellen zu können.

Diese Einstellung kann jedoch ebenfalls voreingestellt werden, wie die Positionswalze 31 zeigt, die parallel zu einer Horizontal-Führung 17 angeordnet ist. Auch diese Positionswalze 31 hat n Halteschienen 34 zur Aufnahme von Fingern 37. Diese Finger 37 arbeiten in Arbeitsstellung mit einer am Mehrspindel-Bohraggregat 20 angebrachten Fingeraufnahme 25 zusammen. Mit dieser Positionswalze 31 können die Abstände der Bohrungsreihen vom Werkstückanschlag 12 vorgegeben werden. Die Halteschienen 34 der Positionswalze 31 können unterschiedlichen Werkstücken zugeordnet sein oder auch zum Einbringen von Bohrungsreihen senkrecht zur Vorder- und Rückseite der Werkstückauflage 11 verwendet werden.

Beim Verstellen des Traggerüstes oder des Mehrspindel-Bohraggregates 20 werden mittels Handhebel 24 und 26 die Fingeraufnahmen 23 und 25 außer Eingriff mit dem Kopf 38 des Fingers 37 gebracht, so daß das Traggerüst oder das Mehrspindel-Bohraggregat 20 den Finger 37 passieren und mit dem nächsten Finger 37 in der Halteschiene 34 in Eingriff gebracht werden kann. Die Arbeitspositionen werden dabei exakt eingehalten, wenn die Fingeraufnahmen 23 und 25 auf die Außenkontur des Kopfes 38 des Fingers 37 angepaßt sind.

Die Fingeraufnahmen 23 und 25 können auch mittels Federn am Traggerüst oder am Mehrspindel-Bohraggregat 20 abgestützt werden, so daß die Wirkverbindung zwischen Finger 37 und Fingeraufnahme 23 bzw. 25 mit Kraftaufwendung automatisch aufgehoben und wieder hergestellt werden kann.

Die Positionswalzen 30 und 31 können auch eine unterschiedliche Anzahl von Halteschienen 34 und unterschiedliche Längen aufweisen. Einer auswechselbaren Anbringung an dem Maschinengestell 10 und am Traggerüst ist jedoch in jedem Fall der Vorzug zu geben, da voreingestellte Positionswalzen 30 und 31 für verschiedene Werkstücke bereitgestellt werden können, so daß die Umrüstung der Bohrmaschine sehr leicht und schnell vorgenommen werden kann und dies mit einfachen Positionswalzen.

Um die Finger in den Halteschienen auf das gewünschte Bohrbild einstellen zu können, ist nach einer weiteren Ausgestaltung vorgesehen, daß parallel zu den in Arbeitsstellung gebrachten Halteschienen 34 der Positionswalzen 30, 31 Leisten mit einer Einstellskala angeordnet sind, die mit den den Halteschienen 34 abgekehrten Längsseiten klappbar am Maschinengestell 10 bzw. einer Horizontal-Führungsschiene 17 angebracht sind.

## Patentansprüche

1. Bohrmaschine, insbesondere für die Holzbearbeitung, zum Bohren von Lochreihen und Konstruktionsbohrungen in plattenförmige Werkstücke, wie Schrankseitenwände, Schranktüren und dgl., mit einem eine Werkstückauflage aufweisenden Maschinengestell und einem an Führungsschienen verstellbaren Bohraggregat, bei der die Werkstückauflage einen Werkstückanschlag und eine Anschlageinrichtung mit in der Verstellrichtung des Bohraggregates einstell- und festlegbaren Positionsfingern, die in Verbindung mit dem Bohraggregat die Bohrpositionen längs der Verstellbahn des Bohraggregates festlegen,
dadurch gekennzeichnet,
daß das Bohraggregat (20) von einem Traggerüst mit vorderen und hinteren Vertikalträgerpaaren (15,16) getragen ist, das an Führungsschienen (13) oder Führungswellen (14) parallel zur Vorder- und Rückseite der Werkstückauflage (11) verstellbar ist,
daß das Traggerüst mit einem Paar von Horizontal-Führungsschienen (17) versehen sind, die senkrecht zur Vorder- und Rückseite gerichtet sind und auf denen das Bohraggregat (20) verstellbar geführt ist, daß die Positionsfinger (37) in Halteschienen (34) einer Positionswalze (30), mit mehreren, längsgerichteten und über den Umfang verteilten Halteschienen (34) einführbar und in gewünschten Bohrpositionen festlegbar sind,
daß die Positionswalze (30) parallel zur Längsseite der Werkstückauflage (11) angeordnet oder anbringbar ist, und mit einer am Traggerüst verstellbaren Fingeraufnahme (23) zusammenarbeitet, und
daß die Halteschienen (34) der Positionswalze (30) mit ihren positionierten Fingern (37) wahlweise in Arbeitsstellung mit der Fingeraufnahme (23) des Traggerüstes bringbar sind.

2. Bohrmaschine nach Anspruch 1,
dadurch gekennzeichnet,
daß eine weitere Positionswalze (31) parallel zu den Horizontal-Führungsschienen (17) angebracht oder anbringbar ist und mit einer am Bohraggregat (20) angebrachten, verstellbaren Fingeraufnahme (25) zusammenarbeitet, wobei die Halteschienen (34) der weiteren Positionswalze (31) mit ihren positionierten Fingern (37) wahlweise in Arbeitsstellung mit der Fingeraufnahme (25) des Bohraggregates (20) bringbar sind.

3. Bohrmaschine nach Anspruch 1 oder 2,
dadurch gekennzeichnet,
daß das Bohraggregat (20) als Mehrspindel-Bohraggregat (20) ausgebildet ist, deren Spindeln (21) und die Halteschienen (34) der Positionswalzen (30,31) mit aufeinander abgestimmten Markierungen versehen sind, die die Zuordnung zwischen den Halteschienen (34) mit ihren positionierten Fingern (37) und den Spindeln (21) des Mehrspindel-Bohraggregates festlegen.

4. Bohrmaschine nach einem der Ansprüche 1 bis 3,
dadurch gekennzeichnet,
daß die Halteschienen (34) im wesentlichen eine hinterschnittene Aufnahme bilden und zu einem einstückigen n-eckigen Profilabschnitt (33) vereinigt sind.

5. Bohrmaschine nach einem der Ansprüche 1 bis 4,
dadurch gekennzeichnet,
daß die Positionswalzen (30,31) in am Maschinengestell (10) angebrachten Walzenlagern (32) drehbar und vorzugsweise auswechselbar gelagert sind.

6. Bohrmaschine nach einem der Ansprüche 1 bis 5,
dadurch gekennzeichnet,
daß den Positionswalzen (30,31) jeweils eine Dreheinrichtung zugeordnet ist, mit der die Positionswalze (30,31) in 360°/n-Winkelschritten verdrehbar ist.

7. Bohrmaschine nach einem der Ansprüche 1 bis 6,
dadurch gekennzeichnet,
daß die Positionsfinger (37) einen kegelstumpfförmigen Kopf (38) aufweisen, der in einen n-eckigen Profilabschnitt (39) und einen Gewindebolzen (40) übergeht und
daß der Gewindebolzen (40) des Positionsfingers (37) durch die Bohrung einer Befestigungsplatte (36) hindurch in die Halteschiene (34) eingeführt und darin in eine in der Halteschiene (34) gehaltene Mutter (35) eingeschraubt ist.

8. Bohrmaschine nach Anspruch 7,
dadurch gekennzeichnet,
daß die Fingeraufnahmen (23,25) des Traggerüstes und des Bohraggregates (20) auf die Außenkontur des Kopfes (38) der Finger (37) ausgelegt sind.

9. Bohrmaschine nach einem der Ansprüche 1 bis 8,
dadurch gekennzeichnet,
daß die Fingeraufnahmen (23,25) des Traggerüstes und des Bohraggregates (20) mittels Handhebel (24,26) in Richtung der Längsachse der Finger (37) der in Arbeitsstellung befindlichen Halteschiene (34) der Positionswalzen (30,31) verstellbar und außern Eingriff mit dem in Arbeitsstellung befindlichen Finger (37) bringbar sind.

10. Bohrmaschine nach einem der Ansprüche 1 bis 8,
dadurch gekennzeichnet,
daß die Fingeraufnahmen (23,25) am Traggerüst und am Bohraggregat (20) abgefedert sind und in Arbeitsstellung auf den betreffenden Finger (37) der Halteschiene (34) aufrasten.

11. Bohrmaschine nach einem der Ansprüche 1 bis 10,
dadurch gekennzeichnet,
daß parallel zu den in Arbeitsstelung gebrachten Halteelementen (34) der Positionswalzen (30,31) Leisten mit einer Einstellskala angeordnet sind, die mit den den Halteschienen (34) abgekehrten Längsseiten klappbar am Maschinengestell (10) bzw. einer Horizontal-Führungsschiene (17) angebracht sind.
